# FASCICULE DE BREVET EUROPEEN

(11) **EP 0 359 222 B1**
(45) Date de publication et mention de la délivrance du brevet: **15.11.1995**
(21) Numéro de dépôt: 89116942.7
(22) Date de dépôt: 13.09.1989
(51) Int. Cl.: C08G 18/00, C08G 18/18, C08G 59/40, C08G 59/72

(54) **Mélanges stables à température ambiante de résines réactives thermodurcissables, complexes catalyseurs latents de durcissement de ces mélanges, leurs procédés de fabrication et résines thermodurcies obtenues à partir de ces mélanges**
Bei Umgebungstemperatur stabile, Reaktive, hitzehärtende Harzmischungen, latente Katalysatorkomplexe für diese Mischungen, Verfahren zu ihrer Herstellung und die aus diesen Mischungen hergestellte, hitzehärtende Harze
Room temperature-stable blends of heat-curable reactive resins, latent catalyst complexes for these blends, process for their manufacture and the heat-curable resins obtained from these blends

(30) Priorité: 16.09.1988 FR 8812114
(43) Date de publication de la demande: 21.03.1990
(73) Titulaire: GEC ALSTHOM SA, 75116 Paris (FR)
(72) Inventeur: Atchekzai, Jean, F-69100 Villeurbanne (FR); Bonnetot, Bernard, F-69100 Villeurbanne (FR); Frange, Bernard, F-69006 Lyon (FR); Mongeot, Henri, F-69100 Villeurbanne (FR); Anton, Alain, F-69360 Saint Symphorien d'Ozon (FR); Dubuisson, Alain, F-69530 Brignais (FR)
(74) Mandataire: Weinmiller, Jürgen

(56) Documents cités:
- EP-A- 0 129 787
- EP-A- 0 175 638
- FR-A- 2 549 277
- US-A- 4 755 580
- CHEMICAL ABSTRACTS, vol. 90, no. 22, mai 1979, page 52, résumé no. 169687y,Columbus, Ohio, US; & JP-A-79 07 497

## Description

La présente invention concerne des mélanges stables à température ambiante de résines réactives thermodurcissables à chaud pour imprégnation d'isolation de matériaux électriques ou pour la préparation de produits de moulage ou de matériaux composites, comprenant des composés liquides oligo-ou polyisocyanates et des résines liquides époxydes et un catalyseur latent de durcissement, inactif à la température ambiante, constitué par un complexe d'addition d'un composé aminé du groupe constitué par les amines, les alkylhydrazines et les imidazoles, avec un halogénure de bore.

Elle s'étend en outre à des catalyseurs latents de durcissement de ces mélanges, à base de complexes de trihalogénures de bore et d'un composé aminé du groupe constitué par les amines, les alkylhydrazines et les imidazoles, à des procédés de préparation de ces complexes et aux résines thermodurcies obtenues à partir de ces mélanges.

On a déjà proposé dans les documents FR-A-2373129 et EP-A-0129787 des mélanges de résines thermodurcissables pour l'imprégnation d'isolement de machines électriques et pour la préparation de produits de moulage, à base de composés de polyisocyanates et de résines époxydes liquides, dont la viscosité n'augmente que très lentement à température ambiante et qui durcissent rapidement à température plus élevée, comprenant comme catalyseur latent de durcissement des complexes d'addition d'amines tertiaires et de trichlorure ou de trifluorure de bore.

On sait que ces résines se transforment à chaud par polycondensation en résines isocyanurate-oxazolidones, présentant de bonnes propriétés comme résines d'imprégnation pour isolations de machine électriques ou comme produits de moulage. De tels mélanges ne conservent cependant pas leur stabilité à température ambiante sur de longues périodes, et les propriétés mécaniques des résines obtenues après durcissement par chauffage, notamment les résistances à la flexion et aux chocs mécaniques, restent insuffisantes pour certaines applications.

La présente invention a pour but de procurer des mélanges de résines réactives thermodurcissables à base de composes liquides oligo-ou polyisocyanates et de résines liquides époxydes présentant une meilleure stabilité à froid, et se transformant par chauffage en résines durcies de propriétés mécaniques améliorées.

Le document US-A 4 755 580 décrit un mélange d'une part d'anhydride maléique et d'un composé hétérocyclique, préalablement irradié, d'autre part d'un complexe BX3-amine, ceci en vue du durcissement d'une résine époxy.

Le document EP-A 0 175 638 décrit un complexe thermodurcissable comprenant un polyisocyanate, une résine époxyde et un liant oléfine non saturé, avec comme accélérateur, un complexe à base de trichlorure de bore.

Un autre but de l'invention est de présenter des mélanges permettant d'améliorer la qualité des polymères et de réduire l'exothermicité de la réaction.

L'invention a pour objet des mélanges stables à température ambiante de résines réactives thermodurcissables à chaud pour imprégnation d'isolation de matériaux électriques ou pour la préparation de produits de moulage ou de matériaux composites, comprenant des composés liquides oligo- ou polyisocyanates et des résines liquides époxydes, en proportion telles que le rapport molaire époxy/isocyanate soit de 0,1 à 1, et un catalyseur latent de durcissement, inactif à la température ambiante, constitué par un complexe d'addition d'un composé aminé du groupe constitué par les amines, les alkylhydrazines et les imidazoles, avec un halogénure de bore, caractérisé en ce qu'ils comportent en outre de 0,05% à 5% en poids d'anhydride maléique, ou en ce que l'halogénure de bore est le tribromure de bore avec ou sans addition d'anhydride maléique.

Le composé aminé du complexe est l'octyldiméthylamine ou la benzyldiméthylamine.

En variante, le composé aminé du complexe est la diméthylhydrazine.

Dans un mode particulier de mise en oeuvre de l'invention, les mélanges comprennent de 0,1% à 15% en poids de complexe d'addition d'un composé aminé et d'halogénure de bore.

Par exemple, le composé aminé est l'octyldiméthylamine ou la benzyldiméthylamine, et les mélanges comprennent de 0,1% à 5% en poids de complex d'addition.

L'invention a également pour objet des catalyseurs de durcissement de mélanges de composés liquides oligo- ou polyisocyanates et de résines liquides époxy, caractérisés en ce qu'ils sont constitués par un complexe d'addition de tribromure de bore et d'un composé du groupe formé par les amines, les alkylhydrazines et les imidazoles, additionné d'anhydride maléique.

Parmi les amines convenant plus particulièrement pour la fabrication des complexes avec un trihalogénure de bore, on citera particulièrement, outre l'octyldiméthylamine et la benzyldiméthylamine, la N,N- diméthylamine, la pyridine, la triéthylamine, la triméthylamine, la N, N, N', N', tétraméthyl -1,4- butane-diamine, la triisooctylamine et la pipéridine.

De manière générale, les mélanges selon l'invention présentent une stabilité à la température ambiante améliorée et permettent d'obtenir des résines durcies par chauffage de meilleures propriétés mécaniques par rapport à ceux comportant comme catalyseurs latents des mélanges de trichlorure ou de trifluorure de bore et d'un composé aminé, tel qu'une amine tertiaire ou un imidazole.

Il est décrit ci-après, à titre d'exemples et en référence aux figures du dessin annexé, la préparation d'un complexe de tribromure de bore et d'une amine tertiaire, des mélanges stables à la température ambiante de composés liquides oligo-ou polyisocyanates, de résines époxydes liquides et d'un catalyseur latent de durcissement, les propriétés de tels mélanges et les propriétés mécaniques des résines isocyanurate-oxazolidones obtenues par chauffage de ces mélanges.

### Exemple 1 :

### Préparation d'un complexe de tribromure de bore et d'une amine tertiaire.

On dissout dans un solvant anhydre tel que l'hexane à l'abri de l'humidité, du tribromure de bore et une amine tertiaire, à basse température (0° C), car la réaction est isothermique.

On prendra des proportions sensiblement stoechimétriques, avec de préférence un très léger excès de tribromure de bore, et opérera sous très vive agitation. Le produit est purifié par chromatographie sélective pour éliminer les traces d'impuretés. La pureté peut être vérifiée par des spectres de résonance magnétique nucléaire (RMN) du proton. La nature du complexe peut être vérifiée par les méthodes analytiques habituelles, telles les spectres infra-rouge ou de RMN du bore.

### Exemple 2 :

### Mélanges de composés liquides stable à froid.

On prend des quantités respectives de composés liquide oligo-ou polyisocyanates et de résines époxydes liquides telles le rapport molaire groupes époxy/groupes isocyanate soit égal à 0,25, soit :
- 20 parties en poids de polyisocyanates basés sur le méthylène diisocyanate (masse moléculaire 270),
- 20 parties en poids d'isophorone diamine diisocyanate (masse moléculaire 198),
- 20 parties en poids de polyépoxyde obtenu à partir du glycidyldiéther de bisphénol A (masse moléculaire 348),
- 0,15 % à 0,30 % en poids, rapportés au poids total d'oligomères et polymères, d'un complexe de bore obtenu à partir de tribromure ou de trichlorure de bore et d'octyldiméthylamine (qui sera désignée ci-après sous l'abréviation ODMA),
- éventuellement 0,075 % en poids, rapportés au poids total d'oligomères et polymères, d'anhydride maléique.

La viscosité initiale d'un tel mélange, mesurée à 20° C, est inférieure à 200 millipascals.sec (mPa.s).

On a noté :
- le temps t (en jours) au bout duquel la viscosité a doublé en le conservant à 35° C,
- la viscosité η 20° C en mPa.s après 10 jours à 35° C,
- le temps de gélification tg (en minutes sur 15 g de mélange placés à 135° C).

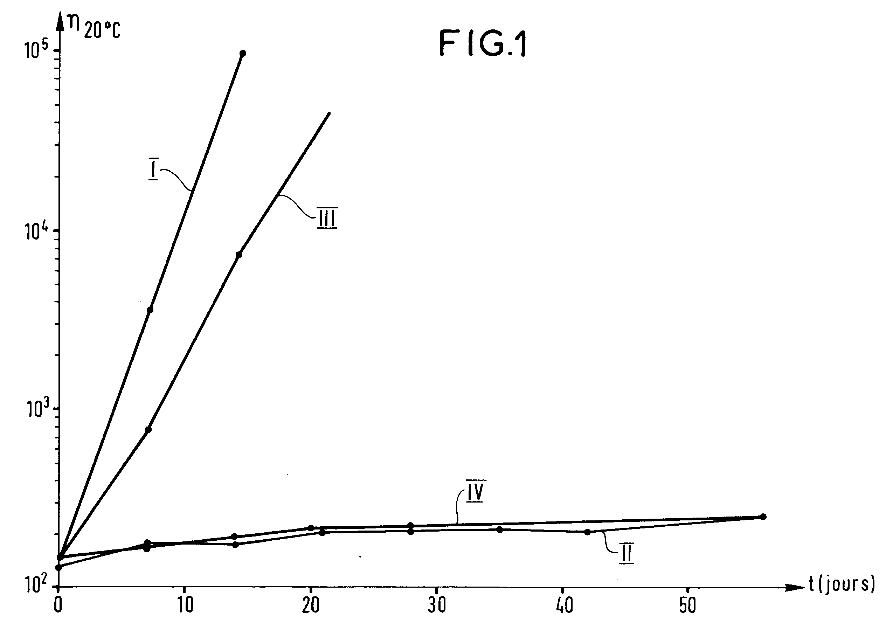

Ces résultats sont résumés dans le tableau I ci- après et la figure 1 du dessin :

**TABLEAU I**

| Nature du complexe | BBr₃, ODMA | BBr₃, ODMA + Anhydride de Maléique | BCl₃, ODMA | BCl₃, ODMA + Anhydride de Maléique |
|---|---|---|---|---|
| t | 3 | > 60 | 1 | > 60 |
| η | 2000 | 160 | 15 000 | 160 |
| tg | 15 | 20 | 9 | 15 |

La figure 1 donne la variation de la viscosité η du mélange à 20° C en fonction de la durée t du stockage à 35° C (en jours) pour les mélanges BCl₃ - ODMA (courbe I), BCl₃ - ODMA + anhydride maléique (courbe II), BBr₃ - ODMA (courbe III) et BBr₃ - ODMA + anhydride maléique (courbe IV). On observe une moindre augmentation de la viscosité pour le mélange BBr₃ - ODMA par rapport au mélange BCl₃ - ODMA, et une augmentation très faible de la viscosité pour les complexes additionnés d'anhydride maléique.

A partir des mêmes mélanges, l'on a réalisé des éprouvettes par chauffage de 4 heures à 120° C, puis 2 heures à 150° C, puis 15 heures à 200° C. On a caractérisé ces polymères par analyse dynamique en torsion (appareil Rheometrics RDS Série II).

On observe dans chacun des cas deux zones de transition vitreuse.

L'écart de température aux sommets entre les deux zones est d'environ 60° C pour les mélanges BCl₃ - ODMA sans anhydrique maléique et d'environ 80° C pour les mélanges BBr₃ - ODMA sans anhydride maléique.

La première zone de transition vitreuse devient prépondérante. Ceci se traduit par une valeur de la variable tg δ élevée, correspondant à un amortissement du matériau étendu sur une large gamme de températures.

On a reporté dans le tableau II ci-après les températures de transition vitreuse (en degrés Celsius) pris aux sommets des valeurs de tg δ .

**TABLEAU II**

| Nature du complexe | BBr₃, ODMA | BBr₃, ODMA + Anhydride de Maléique | BCl₃, ODMA | BCl₃, ODMA + Anhydride de Maléique |
|---|---|---|---|---|
| TV₁ | 257° | 272° | 274° | 278° |
| TV₂ | 333° | 329° | 335° | 332° |

On a effectué sur les résines thermodurcies obtenues à partir des mêmes mélanges par le mode de chauffage indiqué ci-dessus des mesures de résistance en flexion et de résistance aux chocs. On a obtenu dans le cas du catalyseur BBr₃ - ODMA + anhydride maléique une résistance en flexion accrue de 25 %, ainsi qu'une flèche à la rupture plus importante pour un même module. La résistance aux chocs est aussi améliorée de plus de 50 %. Les résultats sont résumés dans le tableau III ci-après.

**TABLEAU III**

| Nature du complexe | BBr₃, ODMA | BBr₃, ODMA + Anhydride de Maléique | BCl₃, ODMA | BCl₃, ODMA + Anhydride de Maléique |
|---|---|---|---|---|
| Résistance à la rupture en flexion (MPa) | 71 | 87 | 68 | 72 |
| Module en flexion (MPa) | 3 130 | 3 160 | 3 150 | 3 170 |
| Flèche à la rupture en flexion (mm) | 3,9 | 4,7 | 3,6 | 3,9 |
| Résistance à la rupture en flexion à 200° C (MPa) | | 67 | | 68 |
| Résistance aux chocs (kj/m²) | 5,5 | 10,4 | 6,1 | 6,8 |

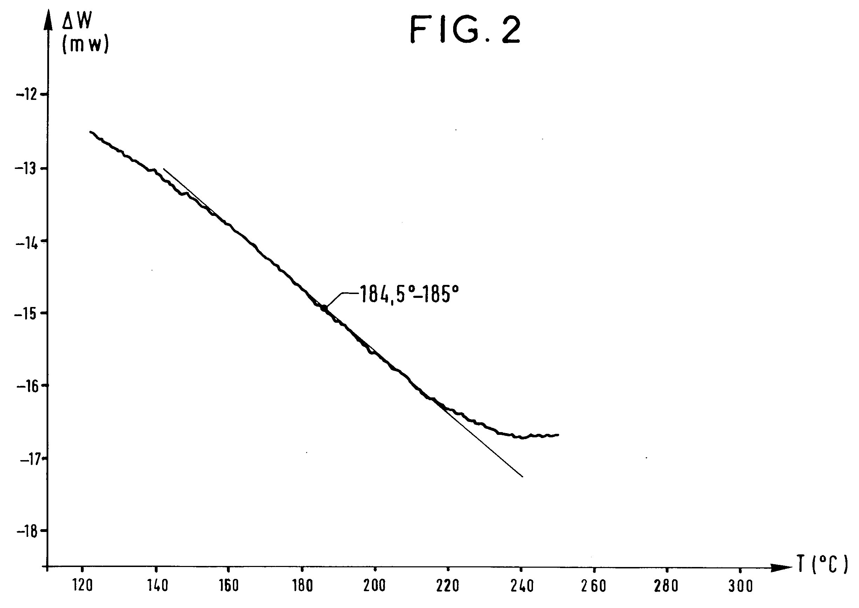

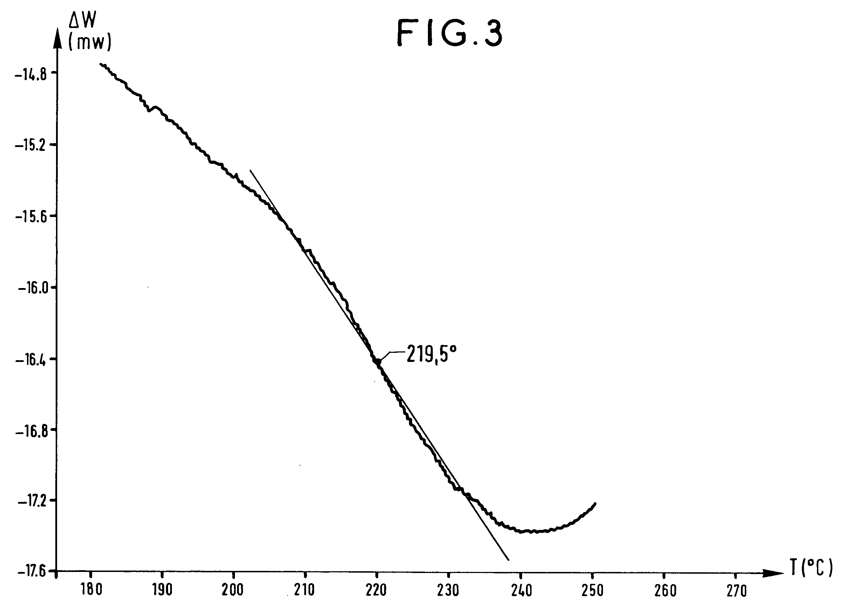

On a également tenté de mesurer les températures de transition vitreuse par une technique classique d'analyse thermique différentielle à l'aide d'un appareil DUPONT 1090. Celui-ci n′est cependant pas assez sensible pour détecter les deux zones de transition vitreuse. Les courbes d'analyse thermique différentielle sur les résines durcies (flux thermique ΔW en milliwatts en fonction de la température T en degrés Celsius) sont données respectivement en figures 2 et 3 pour des résines à catalyseurs latents BBr₃ - ODMA + anhydride maléique et BCl₃ - ODMA + anhydride maléique. On observe dans le cas du premier catalyseur latent un recul de la température de transition vitreuse (185° C) par rapport à celle observée avec le second catalyseur latent (220° C). Celui-ci est lié au caractère moins exothermique de la réaction dans le cas du tribromure de bore. Ceci peut expliquer les caractéristiques mécaniques finales des produits polymérisés, et fait présumer que les complexes à base de tribromure de bore ne réagissent pas de la même manière que ceux à base de trichlorure de bore.

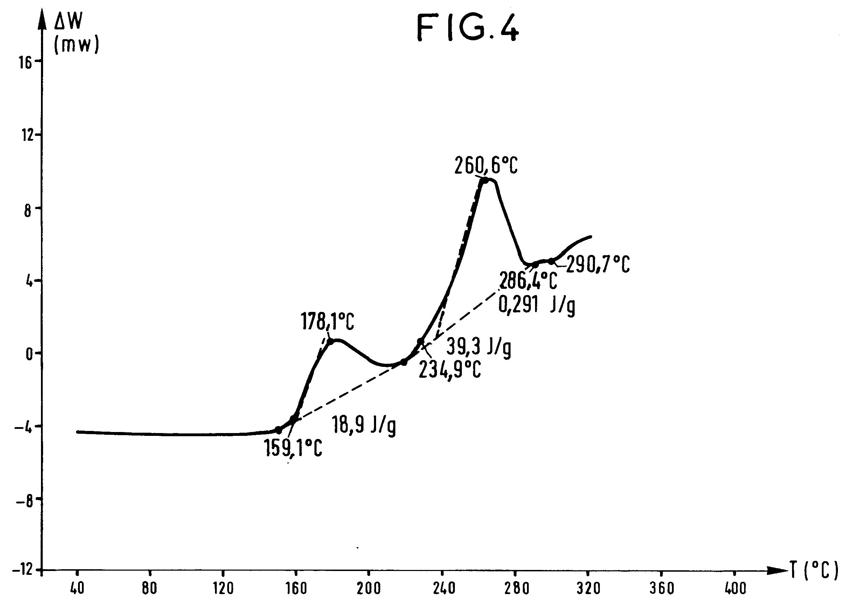

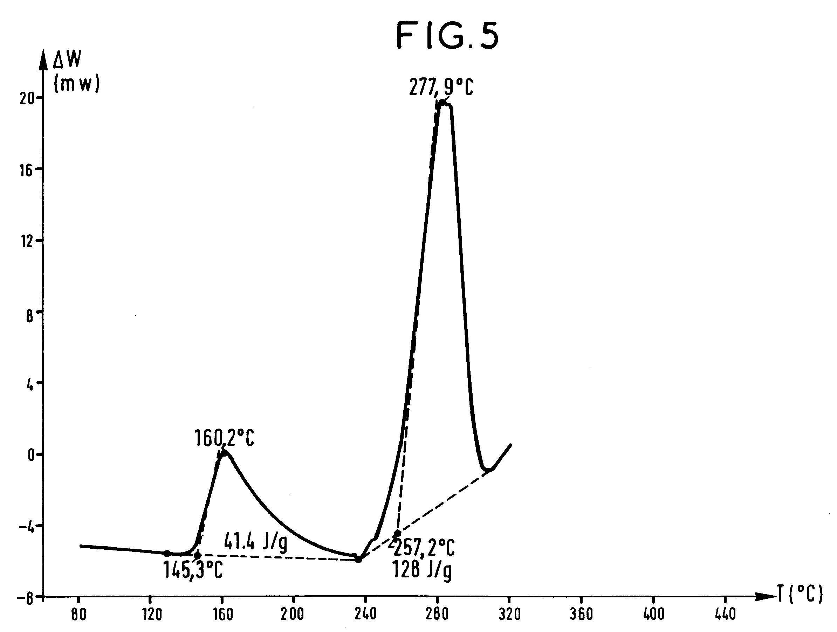

On a effectué également des mesures d'analyse thermique (flux thermique ΔW en milliwatts en fonction de la température T en degrés Celsius) au cours de la réaction de polymérisation sur des mélanges (vernis) contenant comme catalyseurs latents d'une part le complexe BBr₃ - ODMA additionné d'anhydride maléique (figure 4), d'autre part le complexe BCl₃ - ODMA additionné d'anhydride maléique (figure 5). On observe que le catalyseur à base de tribromure de bore produit une réaction plus faiblement exothermique. Ceci permet de fabriquer plus facilement des pièces volumineuses.

Les mélanges de composés liquides oligo-ou polyisocyanates et de résines liquides époxydes, additionnés des catalyseurs latents définis ci-dessus, sont utilisables comme vernis pour imprégnation d'isolants de machines électriques ou pour la fabrication de pièces moulées d'excellentes propriétés mécaniques ou de matériaux composites.

## Revendications

1. Mélanges stables à température ambiante de résines réactives thermodurcissables à chaud pour imprégnation d'isolation de matériaux électriques ou pour la préparation de produits de moulage ou de matériaux composites, comprenant des composés liquides oligo- ou polyisocyanates et des résines liquides époxydes, en proportions telles que le rapport molaire époxy/isocyanate soit de 0,1 à 1, et un catalyseur latent de durcissement, inactif à la température ambiante, constitué par un complexe d'addition d'un composé aminé du groupe constitué par les amines, les alkylhydrazines et les imidazoles, avec un halogènure de bore,
caractérisés en ce qu'ils comportent en outre de 0,05% à 5 % en poids d'anhydride maléique, ou en ce que l'halogènure de bore est le tribromure de bore avec ou sans addition d'anhydride maléique.

2. Mélanges selon la revendication 1, caractérisés en ce que le composé aminé du complexe est l'octyldiméthylamine ou la benzyldiméthylamine.

3. Mélanges selon la revendication 1, caractérisés en ce que le composé aminé du complexe est la diméthylhydrazine.

4. Mélanges selon l'une des revendications 1 à 3, caractérisés en ce qu'ils comprennent de 0,1 % à 15 % en poids de complexe d'addition d'un composé aminé et d'halogènure de bore.

5. Mélanges selon la revendication 4, caractérisés en ce que le composé aminé est l'octyldiméthylamine ou la benzyldiméthylamine, et en ce qu'ils comprennent de 0,1% à 5 % en poids de complexe d'addition.

6. Catalyseurs latents de durcissement de mélanges de composés liquides oligo- ou polyisocyanates et de résines liquides époxy, caractérisés en ce qu'ils sont constitués par un complexe d'addition de tribromure de bore et d'un composé du groupe formé par les amines, les alkylhydrazines et les imidazoles, additionné d'anhydride maléique.

## Claims

1. Mixtures of reactive hot thermosetting resins which are stable at ambient temperature for use in impregnating insulation for electrical materials or in the preparation of moulding products or composite materials, comprising liquid oligo- or poly-isocyanate compounds and liquid epoxy resins in proportions such that the epoxy/isocyanate molar ratio is between 0.1 and 1 and a hardening catalyst which is inert at ambient temperature and is composed of an addition complex of an amine compound from the group consisting of amines, alkylhydrazines and imidazoles, and a boron halide,
characterised in that they further comprise 0.05% to 5% by weight of maleic anhydride or in that the boron halide is boron tribromide with or without addition of maleic anhydride.

2. Mixtures according to claim 1 characterised in that the amine compound of the complex is octyldimethylamine or benzyldimethylamine.

3. Mixtures according to claim 1 characterised in that the amine compound of the complex is dimethylhydrazine.

4. Mixtures according to any one of claims 1 to 3 characterised in that they contain from 0.1% to 15% by weight of an addition complex of an amine compound and a boron halide.

5. Mixtures according to claim 4 characterised in that the amine compound is octyldimethylamine or benzyldimethylamine and in that they contain 0.1% to 5% by weight of addition complex.

6. Latent hardening catalysts for mixtures of liquid oligo- or poly-isocyanate compounds and liquid epoxy resins characterised in that they comprise an addition complex of boron tribromide and an amine compound from the group consisting of the amines, the alkylhydrazines and the imidazoles, to which maleic anhydride is added.

## Patentansprüche

1. Bei Umgebungstemperatur stabile Mischung von durch Wärme härtbaren reaktiven Harzen zur Imprägnierung der Isolation elektrischer Materialien oder für die Präparation von Gießharzen oder Verbundmaterialien,
wobei die Mischung flüssige Oligo- oder Polyisocyanatverbindungen und flüssige Epoxydharze in solchen Anteilen enthält, daß das Molverhältnis zwischen Epoxy- und Isocyanatverbindungen zwischen 0,1 und 1 liegt, und wobei die Mischung weiter einen latenten Härtungskatalysator enthält, der bei Umgebungstemperatur nicht aktiv ist und aus einem Additionskomplex von einem Bor-Halogenid und einer Aminoverbindung aus der Gruppe besteht, die von den Aminen, den Alkyl-Hydrazinen und den Imidazolen gebildet wird, dadurch gekennzeichnet, daß die Mischung außerdem zwischen 0,05 und 5 Gew.% Maleinsäureanhydrid enthält oder daß das Bor-Halogenid Bor-Tribromid mit oder ohne Hinzufügung von Maleinsäureanhydrid ist.

2. Mischung nach Anspruch 1, dadurch gekennzeichnet, daß die Aminoverbindung des Komplexes Octyldimethylamin oder Benzyldimethylamin ist.

3. Mischung nach Anspruch 1, dadurch gekennzeichnet, daß die Aminverbindung des Komplexes Dimethylhydrazin ist.

4. Mischung nach einem der Ansprüche 1 bis 3, dadurch gekennzeichnet, daß sie zwischen 0,1 und 15 Gew.% des Additionskomplexes einer Aminoverbindung und eines Bor-Halogenids enthält.

5. Mischung nach Anspruch 4, dadurch gekennzeichnet, daß die Aminoverbindung aus Octyldimethylamin oder Benzyldimethylamin besteht und daß sie zwischen 0,1 und 5% Gew.% des Additionskomplexes enthält.

6. Latenter Härtungskatalysator für Mischungen von flüssigen Oligo- oder Polyisocyanatverbindungen und von flüssigen Epoxyharzen, dadurch gekennzeichnet, daß der Katalysator aus einem Additionskomplex von Bor-Tribromid und einer Verbindung der Gruppe besteht, die aus Aminen, Alkylhydrazinen und Imidazolen besteht, dem Maleinsäureanhydrid zugefügt ist.
